# EUROPÄISCHE PATENTANMELDUNG

(11) **EP 1 168 117 A1**
(43) Veröffentlichungstag der Anmeldung: **02.01.2002**
(21) Anmeldenummer: 00112978.2
(22) Anmeldetag: 21.06.2000
(51) Int. Cl.: G05B 17/02, G05B 23/02

(54) **Verfahren zur Darstellung und Verarbeitung von Prozessabläufen und Computerprogramm zur Simulation derselben**

(71) Anmelder: ALSTOM Power N.V., 1101 CS Amsterdam (NL)
(72) Erfinder: Weigand, Bernhard, Prof. Dr., 70794 Filderstadt-Sielmingen (DE); Rihak, Pavel, Dr., 5400 Baden (CH); Devaquet, Georges, Dr., 8044 Zürich (CH); Scheu, Martin, 79790 Küssaberg (DE); Schnyder, Giovanni, 8703 Erlenbach (CH); Meyer ter Vehn, Martin, Dr., 79761 Waldshut-Tiengen (DE)
(74) Vertreter: Pöpper, Evamaria, Dr.

(57) **Zusammenfassung**

Bei einem Verfahren zur Darstellung und Verarbeitung eines Wertschöpfungsprozesses wird der Wertschöpfungsprozess als eine Menge auf unterschiedlichen Hierarchiestufen angeordneter Wertschöpfungslinien (VAL) dargestellt. Jede Wertschöpfungslinie erhält über Eingabeschnittstellen Werteinheiten, und konsolidiert diese zu einer Mehrwerteinheit (VAP), wobei ein Mehrwert geschaffen wird, und stellt die Mehrwerteinheit an einer Ausgabeschnittstelle zur Verfügung. Die Mehrwerteinheit kann von einer Wertschöpfungslinie einer übergeordneten Hierarchiestufe als Eingabewerteinheit verwendet werden. Ebenso können die Eigabewerteinheiten der Wertschöpfungslinie von untergeordneten Wertschöpfungslinie zur Verfügung gestellte Mehrwerteinheiten sein, wobei die untergeordneten Wertschöpfungslinien Wertschöpfungslinien einer untergeordneten Hierarchiestufe sind. Alle Wertschöpfungslinien und alle Werteinheiten weisen eine identische Struktur auf; lediglich die verarbeiteten Daten unterscheiden sich. Die selbstähnliche, fraktale Darstellung ermöglicht die transparente und modulare Darstellung und Verarbeitung komplexer und weitverzweigter Wertschöpfungsprozesse. Das Verfahren eignet sich ganz besonders gut zur Realisation in einem Computerprogramm.

## Beschreibung

### Technisches Gebiet

Die vorliegende Erfindung betrifft ein Verfahren zur Darstellung und Verarbeitung von Prozessabläufen eines Wertschöpfungsprozesses. Die Erfindung betrifft weiterhin ein Computerprogramm zur Simulation und Abbildung eines erfindungsgemäss dargestellten Wertschöpfungsprozesses, und ein Verfahren zur Darstellung des Wertschöpfungsprozesses auf einer Ausgabeeinheit eines Computersystems.

Weiterhin betrifft die Erfindung ein Computersystem zur Durchführung des erfindungsgemässen Computerprogramms, sowie ein Computerprogrammprodukt, welches die Anweisungssequenzen des erfindungsgemässen Computerprogramms enthält.

### Stand der Technik

In einer globalisierten Weltwirtschaft werden für Projekte jedweder Art in vermehrtem Ausmasse lokal verteilte Resourcen herangezogen. Dies beruht auf der Erkenntnis, dass Prozessschritte insbesondere auf untergeordneten Ebenen parallel und unabhängig voneinander ablaufen können. Dabei sind kleine autarke Einheiten wesentlich flexibler, und die Teilprozesse werden leichter überschaubar. Ermöglicht wird eine solche Entwicklung durch die rasanten Fortschritte in der Kommunikationstechnik und der Verkehrs- und Transportinfrastruktur. Aufgrund dieser Entwicklungen ist die Geschwindigkeit des Transportes nichtstofflicher Werteinheiten ― wie Wissen, Informationen, Geld und Dienstleistungen ― nahezu unbegrenzt, bei vernachlässigbaren Kosten. Moderne Transport- und Logistiksysteme ermöglichen weltweite Mobilität von Gütern und Waren eigentlich jeder Grösse und Beschaffenheit. Dabei sind die Mobilitätskosten im Vergleich zur gesamten Wertschöpfung häufig fast vernachlässigbar.

Die nunmehr mögliche lokale Diversifizierung der Wertschöpfung ermöglicht einerseits einen äusserst effizienten Einsatz von Resourcen. Zudem erfolgt die Wertschöpfung in kleinen überschaubaren Einheiten, was innerhalb dieser Einheiten eine einfache und effiziente Kontrolle der Wertflüsse ermöglicht. Andererseits wird es extrem schwierig, ein Gesamtprojekt zu überblicken, da die Flüsse von Information, Wert, Waren und dergleichen eine stark verzweigte Struktur aufweisen, mit einer Vielzahl von Schnittstellen. Dabei ist der Überblick für die Mitarbeiter auf jeder Hierarchieebene wichtig: Einerseits muss die Projektleitung zu jeder Zeit die Kontrolle über den Projektablauf bewahren. Andererseits ist es wünschenswert, wenn ein einzelner Mitarbeiter oder Unterlieferant auf einer untergeordneten Stufe erkennen kann, welchen Einfluss seine eigenen Aktivitäten auf eine komplexe Wertschöfungskette hat. Dies ermöglicht die effiziente Echtzeit-Resourcenplanung in den kleinen abgeschlossenen Einheiten, und fördert ein ganzheitliches unternehmerisches Denken des einzelnen Mitarbeiters.

Nach dem Stand der Technik gestaltet es sich jedoch extrem schwierig, solche weitverzweigten Prozesse wie beispielsweise die Wertschöpfung in einem Grossprojekt abzubilden, und Daten, die auf einer beliebigen Ebene in das System eingehen, realistisch zu verarbeiten und den Einfluss auf das gesamte System oder den gesamten Prozess darzustellen.

### Darstellung der Erfindung

Hier will die Erfindung Abhilfe schaffen. Der Erfindung, wie sie in den Ansprüchen gekennzeichnet ist, liegt die Aufgabe zugrunde, ein Verfahren der eingangs genannten Art anzugeben, mit dem es möglich ist, die Prozessabläufe auf eine transparente Art darzustellen und zu verarbeiten. Weiterhin soll die Art der Darstellung des zugrundeliegenden Prozesses die Möglichkeit schaffen, den Gesamtprozess auf einfache und flexible Weise in einem Computerprogramm abzubilden und zu simulieren. Weiterhin soll der Prozess übersichtlich und transparent einem Benutzer darstellbar sein, derart, dass die Wertflüsse innerhalb des dargestellten Projektes oder des Wertschöpfungsprozesses klar und eindeutig nachempfindbar sind.

Dabei muss die Erfindung in der Lage sein, klar umrissen die Übergange zwischen der Gesamtstrategie - beispielsweise der Unternehmensphilosophie und der Definition von Kernkompetenzen ― der Projektplanung und der Projektausführung aufzuzeigen.

Die Erfindung muss weiterhin in der Lage sein, jederzeit den aktuellen Zustand von prozessrelevanten Daten darzustellen.

Die Erfindung muss in der Lage sein, einen effizienten, zeitnahen, und unkomplizierten Informationsfluss sicherzustellen.

Die Erfindung muss in der Lage sein, Kompetenzen und verantwortliche Zuständigkeiten darzustellen.

Die Erfindung muss klare Zielvorgaben und unmittelbare Ergebniskontrolle ermöglichen.

Die Erfindung muss in der Lage sein, Information über einen Prozess durch eindeutig und einheitlich definierte Schnittstellen zugänglich zu machen.

Das erfindungsgemässe Verfahren muss einen Prozess übersichtlich darstellbar abbilden.

Das erfindungsgemässe Verfahren muss einen Prozess glaubhaft wiedergeben.

Die erfindungsgemässe Darstellung eines Prozesses muss in andere Kontexte einbindbar sein.

Die erfindungsgemässe Darstellung eines Prozesses muss transparent sein.

Die erfindungsgemässe Darstellung eines Prozesses muss die verantwortlichen Zuständigkeiten aufzeigen.

Die erfindungsgemässe Darstellung eines Prozesses muss eine Beurteilung des Prozesses erlauben.

Die erfindungsgemässe Darstellung eines Prozesses muss eine hohe Flexibilität aufweisen.

Die erfindungsgemässe Darstellung eines Prozesses muss leicht verständlich sein.

Die Erfindung, wie sie in den Ansprüchen gekennzeichnet ist, macht zur Erfüllung der oben angeführten Forderungen von der Erkenntnis Gebrauch, dass beispielsweise ein ganzes Projekt in eine Vielzahl vertikal hierarchisch gegliederter und horizontal unabhängiger Teilprojekte aufgeteilt werden kann. Jedes untergeordnete Teilprojekt kann als Wertschöpfungslinie **V**alue **A**ssembly **L**ine, VAL, dargestellt werden, wobei jede Wertschöpfungslinie VAL über eine Anzahl von Eingabeschnittstellen Eingabewerteinheiten **I**nput **V**alue **P**ackages IVP erhält, welche entsprechend spezifischer Regeln zu einer Mehrwerteinheit **V**alue **A**dded **P**ackage, VAP, dieses Unterprojektes zusammenfügt werden. Die speziellen Regeln werden durch eine Hauptlinienfunktion **M**ain **L**ine **F**unction MLF definert. Dabei wird in der koordinierenden und steuernden Hauptlinienfunktion MLF der Wertbeitrag innerhalb der Wertschöpfungslinie dargestellt. Über eine Ausgabeschnittstelle der Wertschöpfungslinie ist die Mehrwerteinheit VAP von aussen zugänglich. Die Mehrwerteinheit VAP kann sodann beispielsweise in einer übergeordneten Werschöpfungslinie VAL weiterverarbeitet oder nach aussen als Information zur Verfügung gestellt werden. Wenn man speziell an eine Simulation in Form eines Computerprogramms denkt, kann eine VAP auch auf einem Datenträger gespeichert oder an ein Ausgabemedium ― Bildschirm, Drucker und dergleichen ― weitergegeben werden. Insbesondere kann eine VAP auch auf eine Datei ausgegeben werden und auf einem Datenträger gespeichert und/oder transportiert, oder über Datenfernübertragung oder das Internet einer übergeordneten VAL, oder auch einem an einem anderen Ort lokalisierten Benutzer, zugänglich gemacht werden.

Die Werteinheiten - VAPs und IVPs ― können eine Vielzahl von Informationen beinhalten. Im Sinne einer besseren Übersichtlichkeit und Handhabbarkeit werden die Werteinheiten VAPs und IVPs mit Vorteil in Klassen unterteilt, die nur jeweils die relevanten Daten beinhalten. So wird beispielsweise eine bestimmte Klasse von Werteinheiten alle für das Projekt kostenrelevanten Daten beinhalten, eine weitere Klasse qualitätsrelevante Daten, und so weiter. Im folgenden wird jedoch allgemein auf jeweils eine einzige Werteinheit referiert, um die Sachverhalte in diesem Rahmen nicht unnötig kompliziert darzustellen. Der Fachmann wird die Verallgemeinerung auf mehrere Klassen von Werteinheiten, also mehrere Klassen von VAPs und IVPs, zwanglos vornehmen.

Insbesondere kennzeichnend für die Erfindung ist, dass in Eingabewerteinheiten IVP und in Mehrwerteinheiten VAP gleiche Typen von Informationen übertragen werden. Somit finden sich in unterschiedlichen VAPs und IVPs der gleichen Klasse zwar quantitativ unterschiedliche Informationen; qualitativ ist der Informationsgehalt aber immer identisch. Übertragen auf ein Computerprogramm heisst das, dass die IVPs und die VAPs als in standardisierten Datenformularen vorliegen. Die Datenstruktur dieser Datenformulare, welche in Art einer Datei vorliegen können, bleibt immer gleich. Es sind also an der selben Position des Datensatzes immer die selben Typen von Daten gespeichert, während der quantitative Inhalt der Dateien jeweils unterschiedlich ist. Wenn also zum Beispiel die Information über erfolgte Bearbeitungsschritte oder über Kosten an einer bestimmten Position einer IVP einer Klasse abgelegt ist, so wird sie sich in einer anderen IVP oder VAP der gleichen Klasse wieder an der selben Position finden.

Die Betrachtung der Erfindung ist als analytischer Top-Down-Ansatz ebenso möglich, wie durch eine synthetische Bottom-Up-Betrachtungsweise. In der Top-Down-Betrachtungsweise wird, grob gesagt, ein gesamtes Projekt oder ein komplexer Prozess als eine Anzahl von Unterprojekten einer untergeordneten Hierarchiestufe dargestellt, deren Mehrwerteinheiten VAPs in einer Wertschöpfungslinie VAL zu einem VAP der höheren Hierarchiestufe zusammengeführt werden. VAPs einer untergeordneten Hierarchiestufe stellen damit gleichzeitig Eingabe-Werteinheiten IVPs einer VAL der nächsthöheren Hierarchiestufe dar. Auf der höchsten Hierarchiestufe N ist der Ausgangswert der VAL das endgültige Ergebnis des gesamten betrachteten Prozesses, beispielsweise der Turn-Over eines Gesamtprojektes. Auf einer darunterliegenden Hierarchiestufe N-1 generieren untergeordnete Wertschöpfungslinien **S**ub **A**ssembly **L**ine, SAL, die VAPs der untergeordneten Hierarchiestufe N-1, die gleichzeitige IVPs der Hierarchiestufe N darstellen. Insofern kann von der höchsten Hierarchiestufe N auf die niedrigere Hierarchiestufe N-1 übergegangen werden. Auf dieser niedrigeren Hierarchiestufe stellen die SALs der höheren Hierarchiestufe selbst wieder VALs dar. Auf der Hierarchiestufe N-1 existiert eine Anzahl VALs. Die VAPs dieser VALs werden zwar von deren SALs beeinflusst und als solche an die übergeordneten VALs weitergegeben; jedoch beeinflussen sich die VALs einer Hierarchiestufe nicht gegenseitig. Weiterhin hat eine VAL einer untergeordneten Hierarchiestufe zwar einen Einfluss auf eine VAL einer übergeordneten Stufe, jedoch hat die VAL einer übergeordneten Stufe keinen Einfluss auf die Wertschöpfung in den untergeordneten Hierarchiestufen. Der Fluss der Werteinheiten innerhalb des Systems ist also gerichtet. Die VALs werden daher als horizontal unabhängig und vertikal unidirektional abhängig bezeichnet.

Kennzeichnend für die analytische Top-Down-Betrachtungsweise ist, dass der Ausgangspunkt eine sehr stark integrierte Projektphase, also beispielsweise der Projekt-Turn-Over, ist. In dieser Phase ist ein hoher Mehrwert geschaffen. Nunmehr werden die Flüsse der Werteinheiten in dieser hoch integrierten Projektphase untersucht. Dabei wird festgestellt, dass auf der höchsten Hierarchiestufe eine VAL eine Anzahl von Werteinheiten IVPs zusammenführt, welche Werteinheiten aus SALs stammen. Es wird auf eine bestimmte SAL fokussiert. Diese SAL kann eine Stufe tiefer auf analoge Weise als VAL dargestellt werden, die Ihrerseits aus einer Anzahl von SALs IVPs erhält, und aus diesen eine VAP generiert. Auf diese Weise kann ein komplexer Prozess immer tiefer verzweigt werden. Auf allen Hierarchiestufen wird aber auf kleine, überschaubare Untereinheiten, eben die VALs dieser Hierarchiestufe und deren SALs, fokussiert. Da keine horizontale Abhängigkeit gegeben ist, kann tatsächlich jeder der Teilprozesse für sich in einem überschaubaren Rahmen gehandhabt werden, ohne zunächst die komplexe Gesamtstruktur im Auge zu haben.

Besonders zu erwähnen ist die Tatsache, dass die verzweigten Teilprozesse alle einander strukturell ähnlich sind. Es handelt sich mithin um ein fraktales System, das heisst, bei jeder Veränderung des Massstabs und weiterer Fokussierung auf einen Teilprozess stellt sich dieser wieder ganz ähnlich dar, wie der vorher betrachtete übergeordnete Teilprozess. Ebenso sind sich alle Teilprozesse einer Hierarchiestufe ähnlich.

Dieses analytische Vorgehen wird je nach verfolgtem Zweig des Wertschöpfungsprozesses bis zu einer mehr oder weniger willkürlich festzulegenden, im allgemeinen auch von dem verfolgten Zweig des Wertschöpfungsprozesses abhängigen, Tiefe weiterverfolgt. Wird beispielsweise ein Herstellprozess betrachtet, so stellt die unterste Hierarchiestufe die betrachtete Fertigungs- und/oder Wertschöpfungstiefe dar.

Dieses Vorgehen sei in einer groben Übersicht am Beispiel der Herstellung eines Kraftfahrzeuges sehr vereinfacht erläutert. Das fertige Kraftfahrzeug stellt dabei die VAP der höchsten Hierarchiestufe dar. Die IVPs sind Karosserie, Antriebsstrang und Fahrwerk, das Band der Endmontage stellt die VAL der höchsten Hierarchiestufe dar. Fahrwerksmontage, Karosseriemontage und die Montage des Antriebsstrangs sind SALs der höchsten Hierarchiestufe. Wird nunmehr beispielsweise auf die Fahrwerksmontage fokussiert, stellt diese eine VAL der nächstniedrigen Hierarchiestufe dar; das montierte Fahrwerk ist deren VAP. Die SALs dieser Hierarchiestufe sind die Montage der Räder, der Radaufhängung, und der Lenkung. Der Hersteller kann nunmehr ein Rad als Zukaufteil betrachten, dessen Herstellung ausserhalb seiner Kernkompetenzen liegt. Auf diesem Prozesszweig würde die weitere Analyse dann abgebrochen, und das Rad als gegebene, auf dieser Hierarchiestufe in den Wertschöpfungsprozess hineingelieferte Werteinheit betrachtet. Damit wird die Wertschöpfungstiefe auf diesem speziellen Zweig definiert, während beispielsweise die Montage der Radaufhängung noch auf einer tieferen Stufe als innerhalb der eigenen Kompetenzen liegend betrachtet werden kann. An diesem Beispiel zeigt sich, dass es im Zusammenhang mit der Erfindung ein relativer Begriff ist, wenn von einer untersten Hierarchiestufe gesprochen wird. Tatsächlich liegt hier eine mehr oder weniger willkürliche Definition vor, wo die Grenzen der eigenen Kompetenzen zu ziehen sind. Gleichwohl wird es im Rahmen der vorliegenden Erfindung unumgänglich sein, auch in den Ansprüchen als Bezugspunkt eine untersten Hierarchiestufe zu referieren. Aufgrund der oben gemachten Ausführungen wird der Fachmann nunmehr in der Lage sein, diesen Terminus im Gesamtkontext richtig einzuordnen, und zu erkennen, dass es sich hierbei nämlich um einen Bezugspunkt handelt. Dies wird unter "Darstellung der Erfindung" nochmals erläutert werden. Theoretisch ― und dies liegt in der Natur eines fraktalen Systems ― kann die Verfeinerung ohne Weiteres ad infinitum weiterverfolgt werden; in der Praxis müssen selbstverständlich Grenzen gezogen werden. Im Bezug auf das oben herangezogene Beispiel kann es weiterhin aus Gründen der Logistik als sinnvoll betrachtet werden, einen Unterlieferanten, der besagtes Rad liefert, in die Analyse des Wertschöpfungsprozesses mit einzubeziehen. Damit verschiebt sich natürlich die unterste Hierarchiestufe nochmals. Auf der Ebene dieses Unterlieferanten ist das Aufziehen des Reifens auf die Felge eine VAL, das Rad eine VAP, und der Reifen und die Felge sind die Werteinheiten, welche von SALs an die VAL übergeben werden. Auch der Unterlieferant könnte eine weitere Analyse seines Prozesses vornehmen, und auf die Stufe der Felgenherstellung absteigen, wobei eine neue untergeordnete Hierarchiestufe entsteht. Auf dieser weiter untergeordneten Hierarchiestufe wäre dann wiederum die Felgenherstellung die VAL, die Felge die VAP, und die Herstellung irgendwelcher Halbzeuge wäre als SALs abzubilden.

Wie hieraus deutlich erkennbar ist, kann der analytische Ansatz bei der Anwendung der Erfindung theoretisch auf an sich identische Weise als Zerlegung des Prozesses und aller Teilprozesse in immer neue, selbstähnliche Untereinheiten ad infinitum weitergeführt werden. Diese Eigenschaft der Erfindung hat eine zentrale Bedeutung, und sie ist eine zentrale Eigenschaft fraktaler Systeme: Der Prozess verästelt in immer feinere Strukturen. Auf jeder Hierarchiestufe weist eine VAL eine Struktur ähnlich der eines Astes auf, wobei die SALs dessen Zweige sind. Bei der Fokussierung auf eine niedrigere Hierarchieebene, ist ändert sich zwar der Inhalt der einzelnen Zweige, die Struktur der fokussierten VAL aber bleibt gleich. Erst auf einer definitionsgemäss niedrigsten Hierarchiestufe kommt es gewissermassen zu einem Bruch der Selbstähnlichkeit. Dort werden die Werteinheiten IVP nicht mehr von untergeordneten Wertschöpfungslinien SAL zur VAL übertragen, sondern von ausserhalb des Prozesses, quasi über die Kontrollraumgrenzen oder Systemgrenzen des betrachteten Wertschöpfungsprozesses hinweg, eingebracht. An der Struktur der VAL selbst ändert dies jedoch nichts. Bei der Analogiebetrachtung mit einem Baum entspricht dies den dünnsten Zweigen. Diese weisen die gleiche Struktur auf, wie die dickeren Äste und Zweige, tragen aber statt noch dünnerer Zweige Blätter.

Auf der Ebene des oben erwähnten Unterlieferanten setzt die synthetische Bottom-Up-Betrachtungsweise an. So kann ein Unterlieferant oder ein beliebiges Team von Prozesseignern **P**rocess **O**wner **T**eam, POT, zunächst den eigenen Teilprozess in einer abgeschlossenen Form abbilden. Dies können alle POTs auf einer untergeordneten Ebene tun. Hierbei können sie zunächst die IVPs ihrer VAL als gegeben und in ihren Teilprozess von aussen einfliessend annehmen. Das heisst, zunächst kann jeder Prozesseigner **P**rocess **O**wner, PO, den eigenen Teilprozess sehr überschaubar darstellen und in Abhängigkeit von den IVPs seine VAP ermitteln. Diese VAP wird, bezogen auf den spezifischen Teilprozess, wieder nach aussen geliefert. VAPs einer Hierarchiestufe dienen dann wiederum als Eingabewerteinheiten, IVPs, einer VAL einer höheren Hierarchiestufe. Ein PO einer höheren Hierarchiestufe kann also seine VAL wiederum sehr einfach abbilden, indem er die VAPs der niedrigen Hierarchiestufe als IVPs und die SALs der niedrigeren Hierarchiestufe als VALs heranzieht. Die Selbstähnlichkeit der Teilprozesse auf unterschiedlichen Hierarchiestufen ermöglicht einen modularen Aufbau des Gesamtprozesses.

Kern der Erfindung ist dabei, alle VALs und SALs als selbstähnliche, fraktale Prozesse darzustellen. Die Darstellung der VALs erfolgt demnach dergestalt, dass Teilprozesse auf jeder Hierarchiestufe auf vollkommen identische Weise als eine VAL und eine Anzahl SALs abgebildet werden. Die SALs stellen an Eingabeschnittstellen der VAL Werteinheiten bereit. In der VAL werden diese Werteinheiten zusammengeführt und es wird eine Mehrwerteinheit VAP generiert, welche die VAL an einer Ausgabeschnittstelle zur Verfügung stellt. Der VAL inhärent ist dabei eine steuernde, koordinierende Funktion, die bestimmt, welche Werteinheiten auf welche Weise zusammengeführt werden. Dies wird als die Linien-Hauptfunktion **M**ain **L**ine **F**unction, MLF, bezeichnet, und stellt den eigentlichen Wertbeitrag dar. Die VAP kann bei weiterer Prozesssynthese unmittelbar als IVP für eine VAL einer nächsthöheren Hierarchiestufe genutzt werden, wobei diese VAL strukturell identisch aufgebaut ist, wie die VAL der darunterliegenden Hierarchiestufe. Weiterhin wird die VAP einer VAL einer bestimmten Hierarchiestufe als Eingabewerteinheit IVP genau einer VAL einer darüberliegenden Hierarchiestufe benutzt. Auch dieser Zusammenhang unterstreicht, dass es zwischen VALs einer bestimmten Hierarchiestufe keine Querverbindung, auch nicht in Form von multiplen Wertflüssen, gibt.

In der analytischen Betrachtungsweise eines Teilprozesses wird die Relevanz der Selbstähnlichkeit für die Erfindung ebenso deutlich. Ein Teilprozess auf einer Hierarchiestufe N beinhaltet auf die oben beschriebene Weise eine VAL und deren SALs. Bei Veränderung des Massstabes und Fokussierung auf eine der SALs kommt man eine Hierarchiestufe tiefer. Die SAL, auf die in einer Stufe N fokussiert wurde, ist beim Übergang auf die niedrigere Hierarchiestufe eine VAL der Stufe N-1, und beinhaltet auf ebenso identische Weise eine Anzahl von SALs, deren Ergebnisse zu einer VAP verknüpft werden.

Aufgrund der erfindungsgemäss realisierten selbstähnlichen, fraktalen Struktur der Prozessdarstellung wird es sehr einfach, den Prozess in einem Computersystem darzustellen. Die Realisierung in einem Computerprogramm kann ebenfalls in einer einfachen Weise erfolgen, da ja alle VALs ähnlich aufgebaut sind und eine identische Struktur der Eingabe- und Ausgabedaten, nämlich der VAPs und der IVPs, haben. Im Prinzip lässt sich das gesamte Programm, das zur Abbildung und Simulation eines komplexen Prozesses notwendig ist, aus einem einzigen Quellcode erstellen. Durch unterschiedliche Parameterblöcke PB lässt sich dann definieren, aus welchen Datenblöcken eine Routine, die eine VAL abbildet, IVPs einliest, auf welche Weise diese miteinander verknüpft werden, und in welchen Datenblock die so entstehende VAP abgelegt wird. Zu den Verknüpfungsregeln, welche der Parameterblock in die Wertschöpfungslinie einbringt, können insbesondere auch die entstehende Kosten und/oder der notwendige Zeitaufwand für den "Durchlauf" durch die Wertschöpfungslinie gehören. Die Funktion des Parameterblocks PB entspricht in groben Zügen der Funktion der Hauptlinienfunktion MLF.

Die Daten, die in den Datenblöcken abgelegt und über diese von einer untergeordneten in eine übergeordnete VAL übertragen werden, können beispielsweise Geld, Anlagenkomponenten, Qualität, Resourcen, Personal, Informationen, Dokumentation, und dergleichen sein. Dabei ist es sinnvoll, die Werteinheiten in verschiedene Klassen zu unterteilen, wie beispielsweise Kosten, Zeit, Qualität, Komponenten, Zuständigkeiten, und weiteres. Wie erwähnt, erfolgt die Ausgabe der Mehrwerteinheiten VAP von einer Wertschöpfungslinie VAL in standardisierte Formulare. Durch das so erzielte einheitliche Datenformat wenigstens von Klassen von Mehrwerteinheiten ist der Transfer von Werteinheiten zwischen Wertschöpfungslinien unterschiedlicher Hierarchiestufen problemlos zu bewältigen.

Jeweils an der Ausgabeschnittstelle einer VAL wird mit Vorteil eine Warnfunktion **E**arly **W**arning **S**ystem, EWS, implementiert. Die Warnfunktion vergleicht die VAP dieser VAL mit einem Sollwert. Bei kritischen Abweichungen **N**on **C**onformance, NC, wird ein Alarm ausgelöst. So können Abweichungen von der Projektplanung, welche die Zielerreichung ― Übergabezeitpunkt, Gewinn, Qualität ― gefährden, bereits in einem frühen Stadium erkannt, lokalisiert, und entsprechende Gegenmassnahmen eingeleitet werden. Auch hier ist das erfindungsgemässe Verfahren von Vorteil, da der Erfolg und sonstige Konsequenzen von Gegenmassnahmen, wie deren Einfluss auf Kosten und Qualität, unmittelbar anhand einer Simulation des Prozesses überprüft werden kann.

Das mit Vorteil realisierte standardisierte Datenformat ermöglicht eine einfache und übersichtliche Darstellung sowohl des Wertschöpfungsprozesses, das heisst der VALs und SALs auf unterschiedlichen Hierarchiestufen, wie auch eine einfache Darstellung der VAPs, beispielsweise eine Übersicht aller VAPs einer Klasse auf einer Hierarchiestufe, oder eine Darstellung einer VAP einer Klasse auf einer Hierarchiestufe als Konsolidierung aller Unter-VAPs der untergeordneten Hierarchiestufe.

Die Einfachheit von Untereinheiten des Systems gewährleistet eine hervorragende Übersichtlichkeit des Computerprogramms und des Computersystems. Es lässt sich auf einfache Weise ein modularer und strukturierter Aufbau des Computerprogramms aus Unterprogrammen, welche ähnliche Teilprozesse darstellen, realisieren. Aufgrund der selbstähnlichen, fraktalen Darstellungsweise eines Prozesses oder allgemein eines Wertschöpfungsprozesses und dem so realisierten streng modularen Aufbau eines Computerprogrammes können Änderungen respektive Ergänzungen auf eine sehr einfache Art und Weise vorgenommen werden. Sollen beispielsweise zusätzliche Wertflüsse dargestellt werden, genügt es, den Quellcode derjenigen Routinen, welche die VALs abbilden, einmal zu ändern, diesen auf die Vielzahl von VALs der unterschiedlichen Hierarchiestufen zu übertragen, und dort mit den teilprozess-spezifischen Parametern zu verknüpfen.

Es sei an dieser Stelle ausdrücklich zu vermerken, dass der Terminus "Computerprogramm" hier selbstverständlich in seiner weitesten Bedeutung zu betrachten ist. Dies ist in diesem Zusammenhang so zu verstehen, dass jede Art von computerlesbaren Anweisungssequenzen, welche ― alleine oder in Verbindung mit dem Fachmann geläufigen Programmen - geeignet sind, einen Computer zur Ausführung der beschriebenen Verfahrensschritte zu veranlassen, das Computerprogramm darstellen kann. Es können dies unmittelbar ausführbare Anweisungssequenzen sein, oder auch ein Quelltext eines Programmes, der in einer Hochsprache wie beispielsweise FORTRAN oder C geschrieben wurde, und der vorgängig seiner Ausführung eines Compiler-Programmes bedarf. Weiterhin fällt auch beispielsweise die Konfigurierung an sich bekannter Tabellenkalkulations- oder Datenbankprogramme für die spezifische Aufgabe in diese Kategorie, ebenso wie eine geeignete Programmierung einer Script-Abarbeitung, und weitere dem fachmann geläufige Mittel zur Programmierung eines Computers oder eines Computersystems. Unter dem Quellcode des Computerprogrammes sind dann ebenfalls in weitest gefasstem Sinne die editierbaren Versionen der Anweisungssequenzen zu verstehen, also beispielsweise auch Tabellen von Tabellenkalkulationsprogrammen, deren Felder Angaben enthalten, die geeignet sind, bei der Verarbeitung der Tabelle durch das Tabellenkalkulationsprogramm einen Computer zur Ausführung der beschriebenen Verfahrensschritte zu veranlassen.

Aufgrund der spezifischen Eigenschaften der erfindungsgemässen Darstellung von Wertschöpfungsprozessen kann ein Computerprogramm, das einen Wertschöpfungsprozess erfindungsgemäss abbildet, auch sehr gut in verteilten Systemen ablaufen. Die standardisierten Schnittstellen erlauben einen problemlosen Transfer der VAPs als Dateien auch zwischen unterschiedlichen Computern, die an unterschiedlichen Orten stehen. Somit kann ein global verteilter Wertschöpfungsprozess tatsächlich auch mit global verteilten Resourcen abgebildet werden. Produktionseinheiten und POTs, die an unterschiedlichen Orten arbeiten, können unmittelbar vor Ort Ihren Anteil am Wertschöpfungsprozess nachbilden. Dabei können Programmroutinen, die eine lokale VAL nachbilden, in die Verwaltung des lokalen POT, beispielsweise eines Unterlieferanten oder eines Zweigwerkes, eingebunden sein. Die dort generierte VAP kann sodann als Datei über Datenfernübertragungsleitungen, via Internet, oder mittels einem Datenträger, an einen Computer übertragen werden, auf dem eine übergeordnete VAL abgebildet ist. In der Folge kann also jede VAL lokal beim jeweiligen POT abgebildet und die Abbildung dieser VAL kann im Computersystem des jeweiligen POT eingebunden sein. Ein POT kann somit die volle Verantwortung für seine VAL übernehmen. Das Computersystem des POT erhält in diesem Falle die IVPs wenigstens teilweise über die standardisierte Schnittstelle per Datenfernübertragung, und gibt die generierte VAP über die Ausgabeschnittstelle als Datei in einem standardisierten Format an eine übergeordnete VAP weiter, wobei auch hier ohne weiteres eine Datenfernübertragung involviert sein kann.

Die Erfindung ermöglicht dabei auch ganz besonders vorteilhaft transparente Arten der Darstellung des Prozesses für den Benutzer.

Weitere vorteilhafte Ausführungen der Erfindungsidee eröffnen sich dem Fachmann angesichts der nachfolgend angegebenen Ausführungsbeispiele und der Patentansprüche.

### Kurze Beschreibung der Zeichnung

Nachfolgend wird die Erfindung an einem in der Zeichnung dargestellten Ausführungsbeispiel näher erläutert. Im einzelnen Zeigt Fig 1 die erfindungsgemässe Darstellung der Wertschöpfung und der Wertflüsse beim Bau eines Kombi-Kraftwerks. Fig. 2 illustriert die Fokussierung auf VALs unterschiedlicher Hierarchiestufen, und den Fluss der zugehörigen Mehrwerteinheiten in einer verallgemeinerten Form. Fig. 3 schliesslich zeigt den detaillierteren Aufbau einer Wertschöpfungslinie.

### Weg zur Ausführung der Erfindung

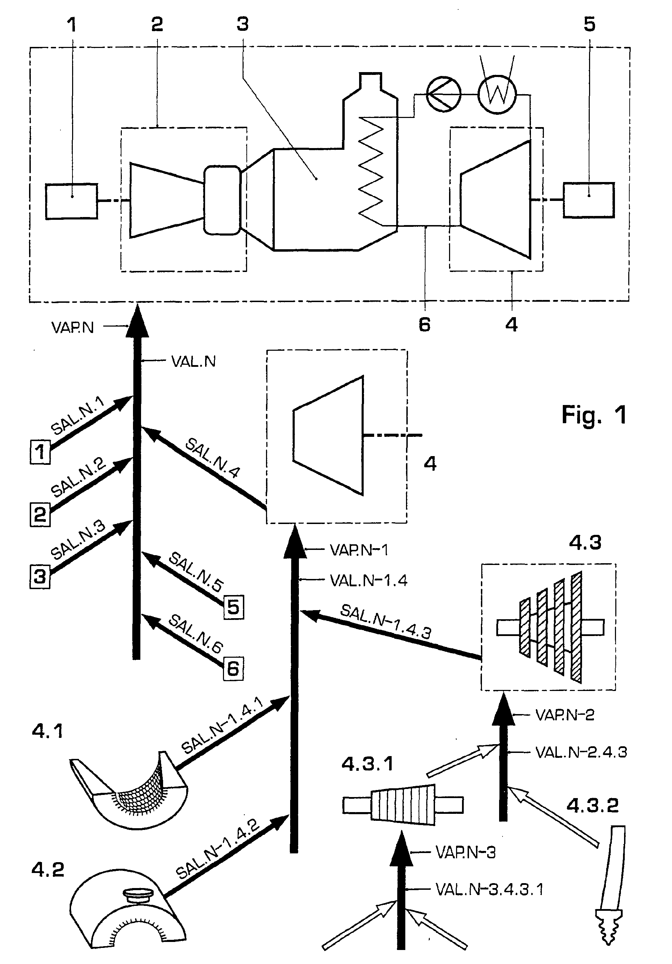

Ein Beispiel für einen Teil eines Wertschöpfungsprozesses ist in Fig. 1 dargestellt. Am Ende eines Wertschöpfungsprozesses steht ein Kombikraftwerk, welches aus einer Gasturbine 2, einem von der Gasturbine angetriebenen Generator 1, einem Abhitzedampferzeuger 3, einer Dampfturbine 4, einem von der Dampfturbine angetriebenen Generator 5, und einem Wasser-Dampf-Kreislauf 6 besteht. Dieses komplette, an den Kunden übergebene Kombikraftwerk ist die Mehrwerteinheit VAP.N der höchsten Hierarchiestufe N. Selbstverständlich gehören auch Dokumentation, Kundenschulung, und vieles mehr zur dieser Mehrwerteinheit; jedoch wird aus Gründen einer übersichtlichen schematischen Darstellung darauf verzichtet, diese zu explizieren. Die Mehrwerteinheit VAP.N wird durch die Wertschöpfungslinie VAL.N der höchsten Hierarchiestufe N generiert. In die Wertschöpfungslinie VAL.N werden Werteinheiten übertragen, nämlich in diesem Beispiel die oben zitierten sechs Komponenten des Kombikraftwerkes. Die Komponenten 1 bis 6 werden als IVPs aus den untergeordneten Wertschöpfungslinien SAL.N übertragen, und in der Wertschöpfungslinie VAL.N zur Mehrwerteinheit VAP.N zusammengefügt. Die Wertschöpfungslinien der untergeordneten Hierarchiestufen sind anhand der Wertschöpfung der Untereinheit 4 "Dampfturbine" erläutert. Auf der Hierarchiestufe N wird aus einer untergeordneten Wertschöpfungslinie SAL.N.4 die Untereinheit 4 "Dampfturbine" in die Wertschöpfungslinie VAL.N der höchsten Hierarchiestufe N übertragen. In einer detaillierteren Betrachtungsweise kann auf die untergeordnete Wertschöpfungslinie SAL.N.4 fokussiert werden. Auf der Hierarchiestufe N-1 stellt sich diese als Wertschöpfungslinie VAL.N-1.4 der Hierarchiestufe N-1 dar. In dieser Wertschöpfungslinie wird aus den Werteinheiten 4.1 "Statoroberteil", 4.2 " Statorunterteil" und 4.3 "Rotor" die Dampfturbine als Mehrwerteinheit generiert, welche auf der höheren Hierarchiestufe wiederum als Eingabe-Werteinheit dient. Die Eingabewerteinheiten 4.1, 4.2, und 4.3 werden wiederum von untergeordneten Wertschöpfungslinien SAL.N-1.4.1, SAL.N-1.4.2, und SAL.N-1.4.3 geliefert. Es kann wiederum auf eine untergeordnete Mehrwertschöpfungslinie der Hierarchiestufe N-1 fokussiert werden. In einer solchen wiederum fokussierten Betrachtungsweise stellt sich eine untergeordnete Wertschöpfungslinie SAL.N-1 der Hierarchiestufe N-1 als Wertschöpfungslinie VAL.N-2 der Hierarchiestufe N-2 dar. In der Figur ist eine Wertschöpfungslinie VAL.N-2 der Hierarchiestufe N-2 dargestellt, in der aus einer Welle 4.3.1 und Schaufeln 4.3.2 ein Rotor gefertigt wird.

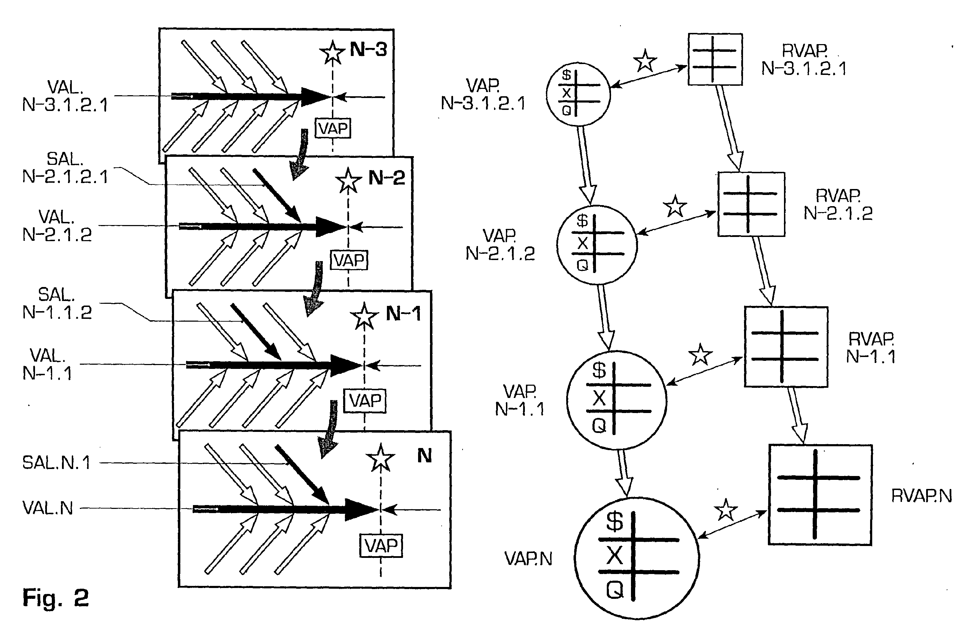

In einer verallgemeinerten Darstellungsweise ist dieser Sachverhalt in Fig. 2 dargestellt. Wertschöpfungslinien VAL sind als Pfeile dargestellt, an deren Spitze Werteinheiten ― Maschinenkomponenten, Geld, Qualität, Informationen und dergleichen ― als VAPs übertragen werden. Auf einer höchsten Hierarchiestufe N erhält eine Wertschöpfungslinie VAL.N Eingabewerteinheiten aus untergeordneten Wertschöpfungslinien SAL.N. Es wird auf eine untergeordnete Wertschöpfungslinie SAL.N.1 fokussiert. Auf einer Hierarchieebene N-1 stellt sich diese als Wertschöpfungslinie VAL.N-1.1 dar, mit einer Anzahl untergeordneter Wertschöpfungslinien SAL.N-1. Wiederum kann auf eine dieser untergeordneten Wertschöpfungslinien, beispielsweise SAL.N-1.1.2 fokussiert werden, die sich wiederum auf der Hierarchiestufe N-2 auf vollkommen analoge Weise als Mehrwertschöpfungslinie VAL.N-2 präsentiert. So kann auf jeder Hierarchiestufe die Wertschöpfung aller untergeordneten Wertschöpfungslinien wiederum als Wertschöpfungslinie auf einer niedrigeren Hierarchiestufe als Verzweigung in dieser untergeordnete Wertschöpfungslinien dargestellt werden. Dabei wechseln beim Übergang von einer Hierarchiestufe zur anderen oder von einem Zweig zum anderen zwar die Inhalte der einzelnen Zweige, die Struktur aber stellt sich auf jeder Hierarchiestufe und in jedem Zweig immer wieder analog dar. Der Wertschöpfungsprozess wird also bei konsequenter Anwendung der Erfindung als fraktale Struktur dargestellt. Eine weitere grundlegende Eigenschaft dieser Darstellung ist, dass die einzelnen Wertschöpfungslinien einer Hierarchiestufe untereinander keine Schnittstellen aufweisen, also unabhängig voneinander ablaufen. Auf der rechten Seite der Figur sind VAPs im Ist-Zustand als Kreise dargestellt. Diese enthalten im Beispiel diese Werteinheiten die Informationen Geld $, Komponenten X und Qualität Q. Eine weitere wichtige Information ist sicher die Zeit; projektspezifisch können auch ganz andere Arten von Informationen oder Werten relevant sein. VAPs werden entlang der Pfeile vertikal unidirektional, immer zu der höheren Hierarchiestufe, übertragen.

Horizontale Wert- und Informationsflüsse, das heisst ein Wert- und/oder Informationsaustausch zwischen den VALs einer Hierarchiestufe, existieren nicht. Weiterhin sind als rechteckige Kästen Sollwerte der VAPs in Referenz-VAPs RVAP abgebildet. An den mit Sternen gekennzeichneten Stellen innerhalb des Wertschöpfungsprozesses, mithin also an den Schnittstellen zwischen den VALs und SALs, findet jeweils ein Vergleich zwischen den Soll-und Istwerten der VAPs, also zwischen VAPs und RVAPs, statt. Auf diese Weise können kritische Abweichungen bereits auf tiefen Hierarchiestufen, damit also in frühen Projektphasen, erkannt und frühzeitig entsprechende Gegenmassnahmen ergriffen werden.

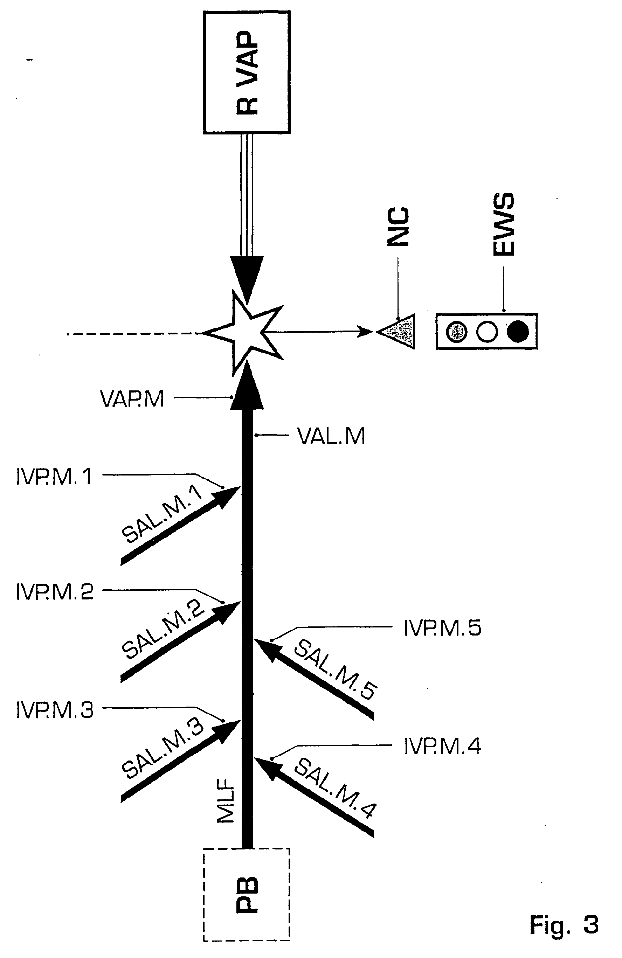

Anhand einer willkürlich herausgegriffenen Wertschöpfungslinie VAL.M irgendeiner Hierarchiestufe M wird dies in Fig. 3 illustriert. VAL.M erhält Eingabe-Werteinheiten aus untergeordneten Wertschöpfungslinien SAL.M.1, SAL.M.2, ..., SAL.M.5. Da es für die Erfindung von grundlegender Bedeutung ist, wird nochmals darauf hingewiesen, dass die SALs SAL.M auf einer niedrigeren Hierarchiestufe M-1 vollkommen analog als VAL.M-1 dargestellt werden. Die VAL VAL.M generiert aus den Eingabe-Werteinheiten IVP, die ihrerseits VAPs der SALs darstellen, eine Mehrwerteinheit VAP, die hier als Pfeilspitze dargestellt ist. Die VAP erhält die an eine übergeordnete Hierarchiestufe oder an eine Ausgabeeinheit übergebene Information in einem standardisierten Übergabeformat, beispielsweise in Listenform. An der Ausgabeschnittstelle findet ein Vergleich mit einer Referenz-Mehrwerteinheit RVAP statt. Die RVAP enthält Sollwerte der VAP als Referenzdaten. Bei kritischen Abweichungen NC wie Kosten- oder Terminüberschreitungen, hoher Ausschussquote einer Produktion, oder anderen Sollwertabweichungen, die eine nachhaltige Störung der Wertschöpfung nach sich ziehen können, wird über das EWS eine Alarmmeldung ausgelöst. Störungen kritischer Prozesse können daher in frühen Stadien erkannt, lokalisiert, und Abhilfemassnahmen getroffen werden. Hier hat die erfindungsgemässe Abbildung des Wertschöpfungsprozesses weiterhin den Vorteil, dass eine kleine Abweichung, die auf einer untergeordneten Ebene noch nicht zu einer Störung führt, aufgrund der Simulation des gesamten Wertschöpfungsprozesses daraufhin untersucht werden kann, ob diese Abweichung auf einer übergeordneten Hierarchiestufe erfolgskritische Auswirkungen zeitigt.

In der Fig. 3 ist weiterhin ein Beispiel dafür angedeutet, wie die erfindungsgemässe Abbildung eines Wertschöpfungsprozesses als Computerprogramm realisiert werden kann. Die VAL, die als dicker schwarzer Pfeil eingezeichnet ist, wird im Beispiel auf allen Hierarchieebenen aus einem identischen Quellcode generiert. An der Basis des Pfeiles erhält der Programmcode entweder bei der Generierung des ausführbaren Codes oder während des Programmablaufs auf geeignete Weise spezifische Werte aus einem Parameterblock PB. Methoden, den spezifischen Parameterblock mit dem generischen Programmcode zu verknüpfen, sind dem Fachmann auf dem Gebiet der Computerprogrammierung ohne Weiteres geläufig. Der Parameterblock PB enthält für jede einzelne VAL, das heisst für jeden Zweig und jede Hierarchieebene, spezifische Information darüber, welche IVPs eingelesen werden soll, und auf welche Weise diese zur Bildung der VAP verknüpft werden. Im eigentlichen Sinne generiert somit der Parameterblock PB die Steuerungs- und Koordinationsfunktion MLF innerhalb der Mehrwertschöpfungslinie VAL. Insofern leistet auch der Parameterblock PB einen Wertbeitrag. Mit Hilfe der selbstähnlichen Darstellung des Wertschöpfungsprozesses ist es daher möglich, ein Computerprogramm, das diesen darstellt, sehr schnell und effizient zu warten und zu erweitern, auch wenn unterschiedliche Routinen dieses Programmsystems in global verteilten Computern ablaufen. Wenn die Parameterblöcke, welche die Verknüpfung der einzelnen Teilprozesse untereinander definieren, unverändert bleiben, so genügt es, den Quellcode der Routinen, welche eine VAL abbilden sollen, einmal zu ändern, und diese beispielsweise über das Internet auf die verschiedenen Computer der lokalen Produktionseinheiten, der Unterlieferanten, und so weiter, zu verteilen. Die Parameterblöcke PB, die in den lokalen Computern gespeichert sind, gewährleisten die spezifische Anpassung der Routinen an die lokal ausgeführten Prozesse während der Generierung des ausführbaren Codes oder auch während der Ausführung der Routine. Der Parameterblock könnte also eine "include"-Datei sein, wie sie auf an sich bekannte und übliche Weise beim Übersetzen eines Programms in den Quellcode eingelesen wird, und die beispielsweise Teilprozess-spezifische Konstanten und Parameter definiert, welche den Programmablauf steuern. Es könnte auch eine logische Verbindung zu einer während der Laufzeit einzulesenden Steuerdatei bestehen. Diese Methoden, und eine Vielzahl von Methoden, welche in Bezug auf die Erfindung vollkommen äquivalent wirken, sind dem Fachmann auf dem Gebiet der Programmiertechnik durchaus geläufig.

Selbstverständlich kann ein Parameterblock PB auch veranlassen, dass eine IVP beispielsweise von einer wie auch immer gearteten Eingabeeinheit, also einem Scanner oder einer Tastatur, gelesen wird.

Aufgabe des Parameterblockes PB ist, allgemein gesprochen, die Steuerungs-und Koordinationsfunktion zu definieren. Insofern stellt auch der Parameterblock in Form der Linien-Hauptfunktion MLF einen Mehrwert in die Wertschöpfungskette hinein dar. Weiterhin definiert der Parameterblock den praktisch notwendigen Bruch der Selbstähnlichkeit auf einer untersten Hierarchieebene, wenn die IVPs nicht von einer weiteren SAL geliefert werden, sondern von Eingabeeinheiten an die Eingabeschnittstellen der VAL übergeben werden.

Der Parameterblock kann weiterhin veranlassen, dass die VAP der jeweiligen VAL auf eine Ausgabeeinheit wie Drucker, Bildschirm und dergleichen, ausgegeben wird.

Der Parameterblock kann veranlassen, dass eine VAP auf eine bestimmte Datei, auf einem bestimmten Datenträger oder eine bestimmte Datenfernübertragungsleitung ausgegeben, und für eine bestimmte VAL einer höheren Hierarchiestufe zugänglich gemacht wird.

Der Parameterblock kann bestimmen, mit welchen Sollwerten einer RVAP die VAL verglichen wird.

Der Parameterblock kann eine zulässige Abweichung zwischen VAP und RVAP bestimmen.

Der Parameterblock kann bestimmen, welche Aktion das EWS beim Überschreiten dieses Toleranzwertes auslöst.

Der Parameterblock kann bestimmen, an welche Stelle das EWS eine unzulässige Abweichung NC meldet.

Der Parameterblock bestimmt, aus welchen SALs eine VAL die IVPs holt, und auf welche Weise diese miteinander verknüpft werden.

Anhand dieser Beispiele erkennt der Fachmann ohne weiteres, welche Möglichkeiten ihm mit dem Werkzeug des Parameterblockes PB zur Verfügung stehen, dass dieser nämlich bei der Ausführung der Erfindung in einem Computerprogramm innerhalb der VAL den eigentlichen Teilprozess definiert.

Die Erfindung ermöglicht dabei auch ganz besonders vorteilhaft transparente Arten der Darstellung des Prozesses für den Benutzer. Entsprechend der Darstellung in Fig. 2 bekommt ein Benutzer auf seinem Bildschirm jeweils nur eine Hierarchiestufe angezeigt, beispielsweise in Form des dort dargestellten dicken Pfeiles, welcher die VAL darstellt, und der dünneren Pfeile, welche die SALs dieser Hierarchiestufe darstellen. Dabei können natürlich auch farbliche Unterscheidungen vorgenommen werden, oder Unterscheidungen in der Darstellungsart der Pfeile, welche die SAL's repräsentieren. Wenn sich der Benutzer nun bei dem Beispiel in Fig. 2 auf einer Hierarchiesstufe N befindet, stellt sich ihm das in Fig. 2 mit "N" gekennzeichnete Rechteck dar. Zur Analyse der Wertflüsse kann der Benutzer auf einfache Weise mit einem Zeigegerät, beispielsweise einer Maus, eine untergeordnete Werschöpfungslinie SAL.N anwählen. Daraufhin ändert sich die Darstellungsart. Der Benutzer sieht nun das mit "N-1" gekennzeichnete Rechteck. Wie oben mehrfach beschrieben, wird die untergeordnete Wertschöpfungslinie SAL.N.1, auf die im Beispiel fokussiert wurde, nun auf der Hierarchiestufe N-1 als Wertschöpfungslinie VAL.N-1.1 dargestellt, auf analoge Weise wie zuvor die Wertschöpfungslinie VAL.N in der Darstellung der Hierarchiestufe N. Dieses Vorgehen kann aufgrund der fraktalen Darstellung auf beliebig tiefe Hierarchiestufen weiterverfolgt werden. Umgekehrt wird der Anwender durch die Auswahl der VAL, also des dicken Pfeiles, unmittelbar auf die nächsthöhere Hierarchiestufe geführt. Somit ist ein Benutzer auf sehr einfache Weise in der Lage, Wertflüsse innerhalb eines komplexen Projektes bidirektional zu verfolgen.

Vorteilhaft können unzulässige Spezifikationsabweichungen NC dargestellt werden, indem alle, hier im Beispiel als Pfeile dargestellten Teilprozesse, die von der Spezifikationsabweichung betroffen sind, beispielsweise durch die Farbe der Darstellung hervorgehoben werden. Ein Benutzer, der auf einer obersten Stufe durch die Veränderung der Farbe seiner VAL von Abweichungen in Kenntnis gesetzt wird, kann dann auf besonders einfache Weise die in Warnfarbe gekennzeichneten Pfeile bis zum Ursprung der Abweichung zurückverfolgen, und durch die Prozesssimulation Gegenmassnahmen testen und optimieren, bevor er diese im realen Wertschöpfungsprozess implementiert.

Bei der in Fig. 2 gewählten Darstellung hat der Benutzer weiterhin die Option, mit dem Zeigegerät auf der Ausgabeeinheit das Symbol der Mehrwerteinheit VAP anzuwählen, um eine Darstellung der derselben zu erhalten.

Der Benutzer kann weiterhin auch eine Ansicht der Referenz-Mehrwerteinheit öffnen, oder diese auch bearbeiten. Ebenso kann er durch Auswahl des Sterns auf seinem Bildschirm Zugriff auf den Soli-Istwertvergleich erhalten.

Speziell, wenn das Programm auf verteilten Systemen und mit einer Vielzahl von Benutzern abläuft, erhält mit Vorteil jeder Benutzer individuelle Zugriffsrechte zum Zugang auf und zum Verändern von übertragenen Informationen. So sollte beispielsweise vermieden werden, dass ein Benutzer, der POT auf einer niedrigen Hierarchiestufe ist, Referenz-Mehrwerteinheiten einer höheren Hierarchiestufe, ändern kann, oder, dass er Zugriff auf andere Teilprozesse der auf der gleichen Hierarchiestufe hat. Auch kann bestimmt werden, dass ein Benutzer nur auf einen Teil des Informationsgehaltes einer Mehrwerteinheit Zugriff hat. Solche Berechtigungssysteme, die dem Fachmann aus der modernen Betriebssystem-Architektur geläufig sind, werden bei der Ausführung der Erfindung als Computerprogramm mit Vorteil nach Bedarf implementiert.

Es wird bei der Darstellung der Mehrwerteinheiten auf einer Ausgabeeinheit-Bildschirm, Drucker, Datei, oder ähnliches - auch von Vorteil sein, für die wenn dort bestimmte Ansichten vordefiniert sind, die nur einen Teil des Informationsgehaltes einer Mehrwerteinheit wiedergeben, oder auch ausgewählte Informationen mehrerer Mehrwerteinheiten kombinieren. So könnte beispielsweise eine Ansicht alle Mehrwerteinheiten des gleichen Typs auf einer bestimmmten Hierarchiestufe zu einem bestimmten Zeitpunkt wiedergeben. Für ein grosses Kombi-Kraftwerk hiesse das beispielsweise, dass der Zustand aller Gasturbinen oder aller Generatoren zu einem bestimmten Zeitpunkt wiedergegeben wird. In einer anderen Ansicht könnte eine Mehrwerteinheit als Zusammenfassung aller untergeordneten Mehrwerteinheiten dargestellt werden, zum Beispiel also eine Turbine als Summe aus Rotor und Stator.

Die oben dargestellten Ausführungsbeispiele dürfen natürlich in keiner Weise zur Einschränkung des in den Ansprüchen gekennzeichneten Schutzumfangs herangezogen werden. Im Lichte der Beschreibung der Erfindung ist der Fachmann in der Lage, eine Vielzahl weiterer Ausführungsformen der Erfindung ganz selbstverständlich zu realisieren.

### Bezugszeichenliste

- EWS: Warnfunktion
- IVP: Eingabewerteinheiten
- NC: Abweichung
- RVAP: Referenz-Mehrwerteinheit
- SAL: untergeordnete Wertschöpfungslinie
- VAL: Wertschöpfungslinie
- VAP: Mehrwerteinheit

## Patentansprüche

1. Verfahren zur Darstellung und Verarbeitung eines Wertschöpfungsprozesses, wobei der Wertschöpfungsprozess als eine Menge von Wertschöpfungslinien (VAL) dargestellt wird, welche Wertschöpfungslinien auf einer Anzahl unterschiedlicher Hierarchiestufen angeordnet sind, wobei die Wertschöpfungslinien die folgenden wesentlichen Eigenschaften aufweisen:
- jede Wertschöpfungslinie verfügt über genau eine Ausgabeschnittstelle und wenigstens eine Eingabeschnittstelle;
- die Wertschöpfungslinie erhält über die Eingabeschnittstellen Eingabewerteinheiten (IVP);
- in der Wertschöpfungslinie werden die Eingabewerteinheiten gemäss in einer spezifischen Hauptlinienfunktion (MLF) definierten Regeln verknüpft, wobei ein Wertbeitrag geleistet wird, und wobei eine Mehrwerteinheit (VAP) generiert wird;
- die Mehrwerteinheit wird über die Ausgabeschnittstelle zur Verfügung gestellt;
- in den Eingabewerteinheiten und in der Mehrwerteinheit sind analoge Typen von Informationen enthalten;
wobei die Prozessdarstellung die folgenden grundlegenden Eigenschaften aufweist:
- eine oberste Hierarchiestufe (N) weist genau eine Wertschöpfungslinie (VAL.N) der höchsten Hierarchiestufe auf, welche eine Mehrwerteinheit (VAP.N) generiert;
- die Wertschöpfungslinie der höchsten Hierarchiestufe erhält Eingabewerteinheiten (IVP) über ihre Eingabeschnittstellen von untergeordneten Wertschöpfungslinien (SAL.N);
- bei Fokussierung auf eine untergeordnete Wertschöpfungslinie (SAL.N) stellt sich diese in vollkommen analoger Weise als Wertschöpfungslinie (VAL.N-1) dar, die Ihre Eingabewerteinheiten von untergeordneten Wertschöpfungslinien (SAL.N-1) erhält, und deren Mehrwerteinheit (VAP.N-1) als Eingabewerteinheit für die Wertschöpfungslinie der obersten Hierarchiestufe (VAL.N) bereitgestellt wird;
- auf jeder Hierarchiestufe (M) bis auf eine unterste Hierarchiestufe kann jeweils auf eine untergeordnete Wertschöpfungslinie (SAL.M) dieser Hierarchiestufe fokussiert werden, welche sich in analoger Weise als eine Wertschöpfungslinie (VAL.M-1) der nächstniedrigeren Hierarchiestufe (M-1) darstellt, welche ebenfalls Eingabewerteinheiten über Eingabeschnittstellen erhält, diese verknüpft, einen Wertbeitrag leistet, und eine Mehrwerteinheit (VAP.M-1) an der Ausgabeschnittstelle zur Verfügung stellt;
dergestalt, dass der Prozess als fraktaler Prozess dargestellt wird, bei dem die Struktur aller Wertschöpfungslinien auf allen Hierarchieebenen ähnlich ist,
und wobei Werteinheiten gemäss den folgenden Schritten verarbeitet werden:
- auf einer untersten Hierarchiestufe werden Werteinheiten (IVP) über die Systemgrenzen des betrachteten Wertschöpfungsprozesses hinweg in die Wertschöpfungslinien (VAL) dieser untersten Hierarchiestufe hinein geliefert;
- die Eingabewerteinheiten (IVP) einer untersten Hierarchieebene werden in Wertschöpfungslinien (VAL) dieser untersten Hierarchiestufe gemäss deren Hauptlinienfunktion (MLF) verknüpft, der Wert der Werteinheiten wird um einen Wertbeitrag der Wertschöpfungslinie und/oder der Hauptlinienfunktion erhöht, und an der Ausgabeschnittstelle der Wertschöpfungslinie wird eine Mehrwerteinheit (VAP) zur Verfügung gestellt;
- auf allen Hierarchiestufen bis auf eine höchste Hierarchiestufe wird die Mehrwerteinheit (VAP) an genau eine Wertschöpfungslinie (VAL) der nächsthöheren Hierarchiestufe weitergeleitet, und dient dieser Wertschöpfungslinie als Eingabewerteinheit;
- die Wertflüsse erfolgen streng unidirektional, jeweils von einer niedrigeren Hierarchiestufe in eine höhere Hierarchiestufe, und die Wertschöpfungslinien einer Hierarchiestufe haben keine Verbindung untereinander.

2. Verfahren nach Anspruch 1, wobei jede Mehrwerteinheit (VAP) mit einer Referenz-Mehrwerteinheit (RVAP) verglichen wird, und wobei unzulässige Abweichungen der Mehrwerteinheit (VAP) und der Referenz-Mehrwerteinheit (RVAP) erfasst und über eine Warnfunktion gemeldet werden.

3. Computerprogramm zur Simulation und Abbildung eines Wertschöpfungsprozesses, wobei der Prozess aus einer Anzahl auf unterschiedlichen Hierarchiestufen angeordneter, auf einer Hierarchiestufe voneinander unabhängiger, selbstähnlicher Wertschöpfungslinien besteht, in welchem Wertschöpfungsprozess Werteinheiten jeweils von einer Wertschöpfungslinie einer untergeordneten Hierarchiestufe in eine Wertschöpfungslinie einer übergeordneten Hierarchiestufe übertragen werden, wobei in jeder Wertschöpfungslinie Eingabewerteinheiten verknüpft, ein Wertbeitrag geleistet, und eine Mehrwerteinheit erzeugt wird, welches Computerprogramm beinhaltet
- maschinenlesbare Anweisungssequenzen einer ersten, übergeordneten Hierarchiestufe, die einen Computer zum Einlesen von Daten aus wenigstens einem Datenformular und zum Verknüpfen dieser Daten nach bestimmten Verknüpfungsregeln, sowie zum Ablegen der so ermittelten Ausgabedaten in einem Datenformular auf einem computerlesbaren Speichermedium und/oder oder einem Ausgabemedium veranlassen;
- voneinander unabhängige maschinenlesbare Anweisungssequenzen wenigstens einer weiteren, der ersten Hierarchiestufe untergeordneten Hierarchiestufe, welche Anweisungssequenzen einen Computer veranlassen, Daten wenigstens aus einer Anzahl Datenformulare auszulesen, miteinander zu verknüpfen, und die Verknüpfungsergebnisse jeweils in ein Ausgabe-Datenformular dieser Hierarchiestufe abzulegen;
- maschinenlesbare Anweisungssequenzen, die einen Computer zum Einlesen von Daten von einer Eingabeeinheit in Eingabe-Datenformulare veranlassen;
wobei die Datenformulare, die beim Programmablauf auf einer bestimmten Hierarchiestufe gelesen werden, Ausgabe-Datenformulare einer dieser Hierarchiestufe untergeordneten Hierarchiestufe oder Eingabe-Datenformulare sind:
wobei alle Datenformulare ein standardisiertes Datenformat aufweisen, dergestalt, dass alle Ausgabe-Datenformulare, die beim Ablauf einer Anweisungssequenz auf einer beliebigen Hierarchiestufe generiert werden, sowie alle Eingabe-Datenformulare eine gemeinsame Datenstruktur aufweisen, also Daten, welche einen Informationstyp beinhalten, immer in der selben Position innerhalb eines Formulars abgelegt sind;
und wobei alle unterschiedlichen maschinenlesbaren Anweisungssequenzen aller unterschiedlichen Hierarchiestufen aus identischen Quellcodes generiert werden, aus denen durch eine spezifische Parameterdatei entweder beim Erzeugen der ausführbaren Sequenzen oder zur Laufzeit des Computerprogramms Anweisungen zum Einlesen der spezifischen Datenformulare und zu den spezifischen Verknüpfungen erstellt werden.

4. Computerprogramm nach Anspruch 3, wobei die in den Formularen enthaltenen Daten Eingabe-Werteinheiten (IVP) und Mehrwerteinheiten (VAP) des Wertschöpfungsprozesses darstellen.

5. Computerprogramm nach einem der Ansprüche 3 oder 4, wobei die von einer Anweisungssequenz generierten Daten nach ihrem qualitativen Informationsgehalt klassifiziert und in unterschiedlichen Klassen von standardisierten Datenformularen abgelegt werden.

6. Computerprogramm nach einem der Ansprüche 3 bis 5, wobei bei der Ausführung des Computerprogramms oder einzelner Sequenzen des Computerprogramms die generierten Mehrwerteinheiten (VAP) mit jeweils einer Referenz-Mehrwerteinheit (RVAP) verglichen werden, welche Referenz-Mehrwerteinheit Spezifikationsdaten enthält, und wobei bei unzulässigen Spezifikationsabweichungen (NC) eine Meldung über eine Warnfunktion (EWS) ergeht.

7. Computerprogramm nach einem der Ansprüche 3 bis 6, wobei maschinenlesbare Sequenzen unterschiedlicher Wertschöpfungs-Teilprozesse auf unterschiedlichen Computern ablaufen, und Datenformulare über Datenfernübertragungsleitungen transferiert werden.

8. Verfahren zur Darstellung eines Wertschöpfungsprozesses auf einer Ausgabeeinheit eines Computersystems, wobei der Prozess aus einer Anzahl auf unterschiedlichen Hierarchiestufen angeordneter, auf einer Hierarchiestufe voneinander unabhängiger, selbstähnlicher Wertschöpfungslinien besteht, in welchem Wertschöpfungsprozess Werteinheiten jeweils von einer Wertschöpfungslinie einer untergeordneten Hierarchiestufe in eine Wertschöpfungslinie einer übergeordneten Hierarchiestufe übertragen wird, wobei in jeder Wertschöpfungslinie Eingabewerteinheiten verknüpft, ein Wertbeitrag geleistet, und eine Mehrwerteinheit erzeugt wird,
wobei das Computersystem neben der Ausgabeeinheit unter Anderem eine Zentraleinheit und ein Zeigegerät beinhaltet,
bei welchem Verfahren jeweils eine Wertschöpfungslinie (VAL.M) einer Hierarchiestufe auf der Ausgabeeinheit dargestellt wird, wobei besagte Wertschöpfungslinie als Pfeil dargestellt wird, an dessen Pfeilspitze eine Mehrwerteinheit (VAP.M) übertragen wird, und dass untergeordnete Wertschöpfungslinien (SAL.M), welche Wertschöpfungslinien einer untergeordneten Hierarchiestufe sind, ebenfalls als Pfeile dargestellt werden, deren Pfeilspitzen am Schaft des Pfeiles, der die Wertschöpfungslinie der übergeordneten Hierarchiestufe darstellt, angesetzt sind,
wobei ein Benutzer des Computersystems mit dem Zeigegerät eine untergeordnete Wertschöpfungslinie anwählen und auf diese fokussieren kann, dergestalt, dass diese in der fokussierten Darstellung auf die gleiche Weise wie die Wertschöpfungslinie der übergeordneten Hierarchiestufe als Pfeil mit darauf zulaufenden kleineren Pfeilen dargestellt wird,
und wobei der Benutzer mit dem Zeigegerät die Pfeilspitze der Wertschöpfungslinie anwählen kann, worauf die Wertschöpfungslinie der übergeordneten Hierarchiestufe in der analogen Weise dargestellt wird, dergestalt, dass der Weg eines Bestandteils des Wertschöpfungsprozesses einerseits von einer höheren Hierarchiestufe mühelos zu Ihrem Ursprung zurückverfolgt werden kann, und der Beitrag dieses Bestandteils zum gesamten Wertschöpfungsprozess durch alle Hierarchiestufen verfolgt werden kann.

9. Verfahren nach Anspruch 8, wobei in der Zentraleinheit des Computersystems ein Computerprogramm gemäss eines der Ansprüche 3 bis 7 abläuft.

10. Verfahren einem der Ansprüche 8 oder 9, wobei die Pfeile von Wertschöpfungsprozessen, welche unterschiedliche Wertbeiträge leisten, mit unterschiedlichen Farben und/oder Strichstärken dargestellt werden.

11. Verfahren nach einem der Ansprüche 8 bis 10, wobei in der Zentraleinheit des Computersystems ein Computerprogramm gemäss Anspruch 6 abläuft, und wobei die Warnfunktion das Computersystem veranlasst, eine auf einer beliebigen Hierarchiestufe aufgetretene unzulässige Werteabweichung auf der Ausgabeeinheit anzuzeigen, und alle Pfeile, welche Wertschöpfungslinien darstellen, die von der Werteabweichung betroffen sind, in einer besonders hervorgehobenen Darstellungsart auf der Ausgabeeinheit dargestellt werden, dergestalt, dass die unzulässige Abweichung von einer höheren Hierarchiestufe aus ohne weiteres zu ihrem Ursprung zurückverfolgt werden kann.

12. Computerprogramm, welches Anweisungssequenzen beinhaltet, welche einen Computer zur Ausführung der Verfahrensschritte nach einem der Ansprüche 8 bis 11 veranlassen.

13. Computersystem zur Durchführung eines Programmes nach einem der Ansprüche 3 bis 7.

14. Computerprogrammprodukt, bei welchem auf einem computerlesbaren Medium Anweisungssequenzen des Programms gemäss einem der Ansprüche 3 bis 7 gespeichert sind.

15. Computerprogrammprodukt, bei welchem auf einem computerlesbaren Medium Anweisungssequenzen des Programms gemäss Anspruch 12 gespeichert sind.
